# EUROPEAN PATENT APPLICATION

(11) **EP 3 018 493 A1**
(43) Date of publication of application: **11.05.2016**
(21) Application number: 15193061.7
(22) Date of filing: 04.11.2015
(51) Int. Cl.: G01S 15/89, G10K 11/34

(54) **CTFM DETECTION APPARATUS AND UNDERWATER DETECTION APPARATUS**

(30) Priority: 07.11.2014 JP 2014226658
(71) Applicant: Furuno Electric Company Limited, Hyogo (JP)
(72) Inventor: Kozuki, Kohei, Nishinomiya-shi, Hyogo (JP)
(74) Representative: Williams, Michael Ian

(57) **Abstract**

A Continuous Transmission Frequency Modulated (CTFM) detection apparatus is provided. The detection apparatus includes a projector (2), a sensor (3), a motion mechanism (4), a reception processor (11), and a beamforming processor (18). The projector (2) transmits a frequency modulated transmission wave. The sensor (3) includes a plurality of receiving elements (3a), each receiving element (3a) of the plurality of receiving elements (3a) receiving a reflected wave, the reflected wave comprising a reflection of the transmission wave. The motion mechanism (4) sets the sensor (3) in motion. The reception processor (11) generates a plurality of beat signals, each beat signal of the plurality of beat signals corresponding to a receiving element (3a) from the plurality of receiving elements (3a) based at least in part on the transmission wave transmitted by the projector (2) and the reflected wave received by the receiving element (3a), wherein at least some of the beat signals from the plurality of beat signals corresponds to a different receiving element (3a) from the plurality of receiving elements (3a). The beamforming processor (18) performs a beamforming process based on each beat signal generated by the reception processor (11).

## Description

### Technical Field

This disclosure generally relates to a CTFM detection apparatus and an underwater detection apparatus, which detect a 3-dimensional position of a target object.

### Background of the Invention

Conventionally-known detection apparatuses include, for example, detection apparatuses disclosed in US2013/215719A1, "Acoustic Imaging using CTFM Sonar" by Masahumi Emura and four others in The Journal of Acoustical Society of Japan, Journal No. 3-5-6, Mar. 2012, and "CTFM Sonar SS330" by SUNWEST TECHNOLOGIES [online] [searched on August 29 in 2014] on the Internet (http://www.sunwest-tech.com/SS300%20Broch%20-%20REV%20G.pdf).

In Paragraph [0069], Fig. 19, etc., of US2013/215719A1, a sonar (detection apparatus) is disclosed, which is capable of detecting 360° within the horizontal plane by rotating 180° two sonar elements arranged to transmit sonar signals to opposite directions from each other (or by rotating 360° a single sonar element).

Further, in "Acoustic Imaging using CTFM Sonar," a sonar (detection apparatus) of a so-called cross-fan beam type is disclosed, which includes a transmission array where cylindrical transducers are stacked linearly in up-and-down directions of the sonar, and a reception array formed by a horizontally-long line array.

Moreover, in "CTFM Sonar SS330," a sonar (detection apparatus) is disclosed, which includes a transmitting element capable of generating a beam spreading into a fan-shape (i.e., fan-beam), and a receiving element capable of generating a comparatively narrow beam (i.e., pencil beam). With this detection apparatus, target objects can be detected over a wide range by rotating with a motor the transmitting element and the receiving element.

Furthermore, a scanning sonar is also generally known, which is capable of detecting target objects within a predetermined range in a comparatively short time period by performing, with a 2-dimensionally arranged array, a beamforming on echoes of transmission waves transmitted over all azimuths.

However, since the detection apparatus disclosed in US2013/215719A1 described above is a detection apparatus of a so-called pulse echo method type (i.e. non-continuous transmission of pulse), it comparatively takes time to detect target objects. Specifically, since a time period required to receive a reflected wave resulting from a pulse-shaped transmission wave transmitted to a predetermined azimuth accumulates at every azimuth, it comparatively takes time to detect over a predetermined range.

Further, with the detection apparatus disclosed in "Acoustic Imaging using CTFM Sonar" described above, although a 2-dimensional image can be generated, a 3-dimensional image cannot be generated.

Moreover, with the detection apparatus disclosed in "CTFM Sonar SS330" described above, similar to the case of the detection apparatus of "Acoustic Imaging using CTFM Sonar," although a 2-dimensional image can be generated, a 3-dimensional image cannot be generated. Also, since the receiving element which generates the pencil beam needs to be moved over a wide range to generate the 2-dimensional image, it comparatively takes time to detect over a predetermined range.

With the scanning sonar described above, multiple elements are required to form the 2-dimensionally arranged array, which causes a cost increase.

### Summary of the Invention

The purpose of this disclosure relates to providing a CTFM detection apparatus, which is capable of detecting a 3-dimensional position of a target object in a comparatively short time period at low cost.
(1) According to one aspect of this disclosure, a Continuous Transmission Frequency Modulated (CTFM) detection apparatus is provided. The CTFM detection apparatus includes a projector, a sensor, a motion mechanism, a reception processor, and a beamforming processor. The projector transmits a frequency modulated transmission wave. The sensor includes a plurality of receiving elements, each receiving element of the plurality of receiving elements receiving a reflected wave, the reflected wave comprising a reflection of the transmission wave. The motion mechanism sets the sensor in motion. The reception processor generates a plurality of beat signals, each beat signal of the plurality of beat signals corresponding to a receiving element from the plurality of receiving elements based at least in part on the transmission wave transmitted by the projector and the reflected wave received by the receiving element, wherein at least some of the beat signals from the plurality of beat signals corresponds to a different receiving element from the plurality of receiving elements. The beamforming processor performs a beamforming process based on each beat signal generated by the reception processor.
(2) A transmission beam generated by said projector may have a 3 dimensional shape.
(3) The reception processor may combine a transmission signal with a received signal to generate the beat signal, wherein the transmission signal is based at least in part on the transmission wave and wherein the received signal is based at least in part on the reflected wave.
(4) The plurality of receiving elements may be linearly arranged.
(5) The motion mechanism may rotate the sensor.
(6) The motion mechanism may rotate the sensor about an axis perpendicular to a receiving surface of the sensor, said receiving surface being a surface where the reflected wave is received.
(7) The motion mechanism may swing the sensor back and forth.
(8) The plurality of receiving elements may be arranged in a straight line. The motion mechanism may set the sensor in motion in a direction that is both perpendicular to said straight line and within a receiving surface of the sensor, said receiving surface being a surface where the reflected wave is received.
(9) The beamforming processor may perform adaptive beamforming.
(10) The projector may generate a transmission beam with a conical shape.
(11) According to another aspect of this disclosure, an underwater detection apparatus is provided. The underwater detection apparatus includes any of the CTFM detection apparatus described above.

### Effect(s) of Invention

According to this disclosure, a CTFM detection apparatus capable of detecting a 3-dimensional position of a target object in a comparatively short time period can be provided at low cost.

### Brief Description of the Drawing(s)

The present disclosure is illustrated by way of example and not by way of limitation in the figures of the accompanying drawings, in which the like reference numerals indicate like elements and in which:
Fig. 1 is a block diagram illustrating a configuration of an underwater detection apparatus according to an embodiment of this disclosure;
Fig. 2 is a chart illustrating a relationship between time and frequency of an ultrasonic wave transmitted by a projector in Fig. 1;
Fig. 3 is a view schematically illustrating a process of detecting a target object by the underwater detection apparatus in Fig. 1, illustrated with a ship on which the underwater detection apparatus is mounted;
Fig. 4 is a block diagram illustrating a configuration of a signal processor in Fig. 1;
Fig. 5 is a chart of one example of a beat signal generated by a first multiplier in Fig. 4;
Figs. 6A and 6B are views for describing a generation of an extracted beat signal, in which Fig. 6A illustrates a waveform of the beat signal outputted from a low-pass filter (i.e., a waveform before the extracted beat signal is extracted), and Fig. 6B illustrates a waveform of the extracted beat signal extracted from the beat signal in Fig. 6A;
Fig. 7 is a view illustrating one example of an image displayed on a display unit;
Fig. 8A is a side view of transmission and reception beams formed by an underwater detection apparatus according to a modification, illustrated with the ship on which the underwater detection apparatus is mounted, and Fig. 8B is a top view of the transmission and reception beams formed by the underwater detection apparatus according to the modification, illustrated with the ship on which the underwater detection apparatus is mounted; and
Fig. 9 is a top view of transmission and reception beams formed by an underwater detection apparatus according to another modification illustrated with the ship on which the underwater detection apparatus is mounted.

### Detailed Description

Hereinafter, an underwater detection apparatus according to one embodiment of this disclosure is described with reference to the appended drawings. The underwater detection apparatus 1 of this embodiment is a CTFM (Continuous Transmission Frequency Modulated)-type detection apparatus, and for example, it is attached to a bottom of a ship (e.g., fishing boat) and used mainly for detecting target objects (e.g., a single fish or a school of fish). The underwater detection apparatus 1 is also used for detecting undulation of a water bottom, such as a rock reef, and a structural object, such as an artificial fish reef. Moreover, according to the underwater detection apparatus 1, a position and a shape of each target object can be grasped 3-dimensionally.

### [Overall Configuration]

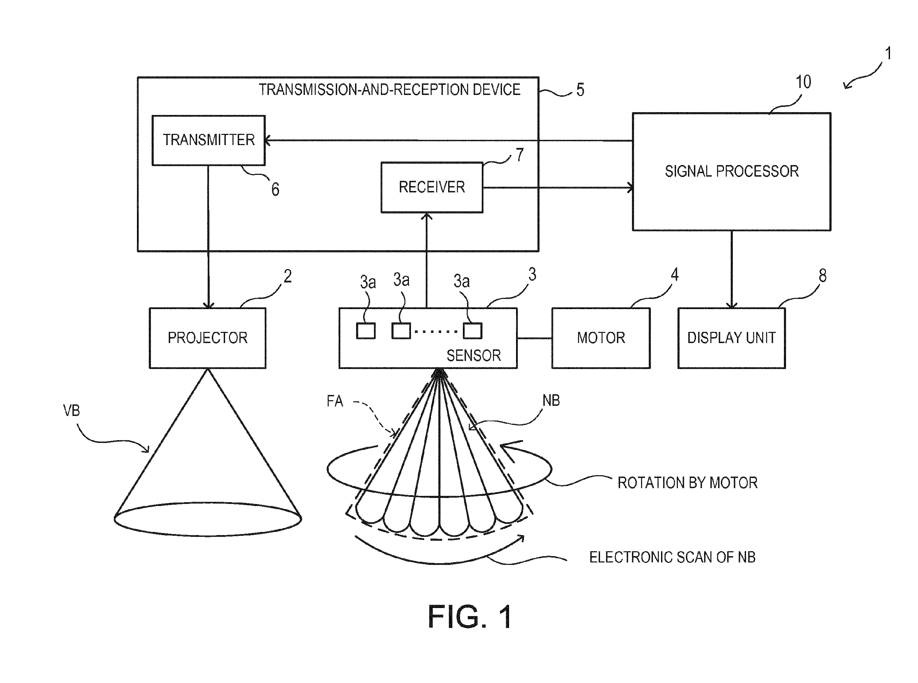

Fig. 1 is a block diagram illustrating a configuration of the underwater detection apparatus 1 of this embodiment. As illustrated in Fig. 1, the underwater detection apparatus 1 includes a projector 2 (which may also be referred to as a transmitting part of a transducer), a sensor 3, a motor 4 (motion mechanism), a transmission-and-reception device 5, a signal processor 10, and a display unit 8.

The projector 2 transmits underwater ultrasonic wave as transmission wave, and is fixed to the bottom of the ship so that a transmitting surface (not illustrated) from which ultrasonic wave is transmitted is exposed to the water and faces vertically downward. In this embodiment, the projector 2 is capable of transmitting a 3-dimensional transmission beam over a comparatively wide range (hereinafter, referred to as the volume beam VB). The volume beam VB has, for example, a conical shape extending downward with the vertex at the projector 2 (in this embodiment, a right conical shape). The opening angle of the conical shape is about 120°. However, this disclosure is not limited as such, and the opening angle may be less than or greater than 120°. For example, the angle may be between 90° and 180°.

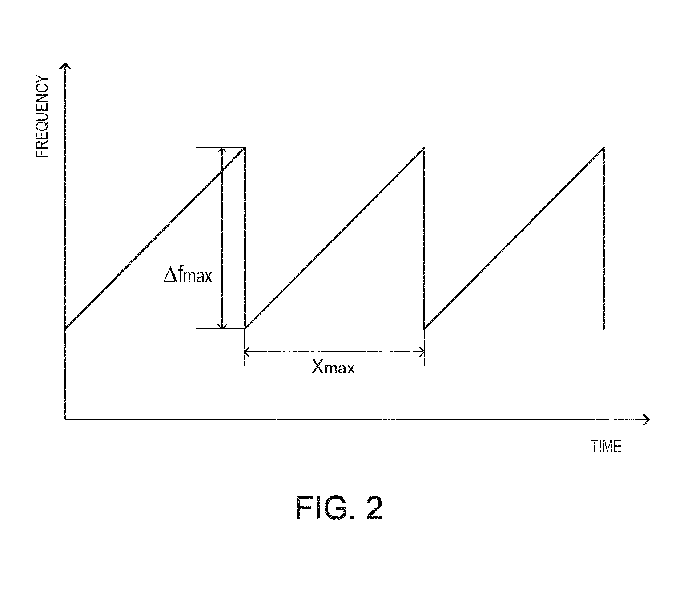

Further, a frequency modulated ultrasonic wave is transmitted from projector 2. Specifically, the transmission wave is a chirp wave of which frequency gradually changes with time, and the projector 2 continuously transmits by repeatedly transmitting the chirp wave at a predetermined time cycle. Fig. 2 is a chart illustrating a relationship between time and frequency of the ultrasonic wave transmitted from the projector 2. In Fig. 2, Xmax indicates a sweeping time period and Δfmax indicates a sweeping bandwidth.

The sensor 3 has a plurality of ultrasonic transducers 3a (receiving elements). Each ultrasonic transducer 3a has a receiving surface (not illustrated) where the ultrasonic wave is received, exposed to the water. Each ultrasonic transducer 3a receives a reflection wave resulting from a reflection of the ultrasonic wave transmitted by the projector 2, and converts it into an electric signal (e.g. a received signal). The ultrasonic transducers 3a are linearly arranged. In other words, the sensor 3 is a linear array sensor. The sensor 3 is arranged so that the direction of arrangement of the ultrasonic transducers 3a is within a horizontal plane (plane perpendicular to the vertical direction) and the receiving surface faces vertically downward.

The motor 4 sets the sensor 3 in motion. Specifically, the motor 4 rotates the sensor 3 about a central axis extending vertically and passing at a central position of the linear array sensor 3 in its longitudinal direction. Thus, the sensor 3 rotates within the horizontal plane perpendicular to the vertical direction. The motor 4 repeatedly rotates the sensor 3 by a particular angle at a particular time interval.

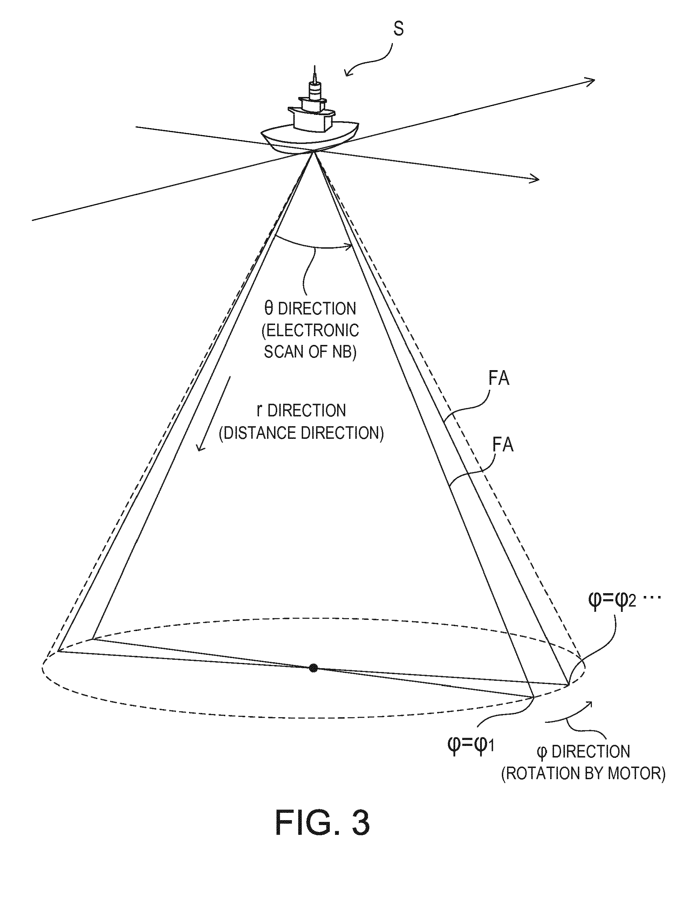

Fig. 3 is a view schematically illustrating a process of detecting the target object by the underwater detection apparatus 1, illustrated with the ship S on which the underwater detection apparatus 1 is mounted. The sensor 3 of this embodiment performs a beamforming in cooperation with the transmission-and-reception device 5 and the signal processor 10 which are described later in detail, so as to perform detection within a fan area FA by electronically scanning a narrow beam NB (see Fig. 1), the fan area FA being a fan-shaped area within which the linear array of the sensor 3 has sensitivity (e.g., an area where θ is between -60° and 60° by having the vertically downward direction as 0°). The fan area FA is thin (e.g., 6° in a thickness direction substantially perpendicular to the scanning direction) and, as illustrated in Fig. 3, generated into a plane spreading downward from the ship S. Specifically, the fan area FA is generated to spread downward 2-dimensionally within a surface including both the direction of arrangement of the ultrasonic transducers 3a and the vertical direction. Further, since the sensor 3 is rotated within the horizontal plane by the motor 4 as described above, the fan area FA accordingly rotates in the same direction (ϕ direction in Fig. 3). Thus, according to the underwater detection apparatus 1 of this embodiment, the target object within 3-dimensional space below the ship (space surrounded by the dashed lines in Fig. 3) can be detected and a 3-dimensional position of the target object within the space can be estimated.

The transmission-and-reception device 5 includes a transmitter 6 and a receiver 7.

The transmitter 6 amplifies the frequency modulated transmission signal generated by the signal processor 10 to obtain a high-voltage transmission signal, and applies the high-voltage transmission signal to the projector 2.

The receiver 7 amplifies the electric signal (e.g. a received signal) outputted by the sensor 3, and A/D converts the amplified received signal. Then, the receiver 7 outputs the received signal converted into a digital signal, to the signal processor 10. Specifically, the receiver 7 has a plurality of receive circuits (not illustrated), and each receive circuit performs the processing described above on the received signal obtained by electroacoustically converting the reflected wave received by the corresponding ultrasonic transducer 3a, and outputs the processed received signal to the signal processor 10.

The signal processor 10 generates the transmission signal (electric signal) and inputs it to the transmitter 6. Further, the signal processor 10 processes the received signal outputted by the receiver 7 to generate an image signal of the target object. The configuration of the signal processor 10 is described later in detail.

The display unit 8 displays, on a display screen, an image corresponding to the image signal outputted by the signal processor 10. In this embodiment, the display unit 8 3-dimensionally displays an underwater state below the ship. Thus, a user can estimate the underwater state below the ship (e.g., a single fish or a school of fish, undulation of the water bottom, whether the structural object, such as an artificial fish reef, exists, and a position thereof) by looking at the display screen.

### [Configuration of Signal Processor]

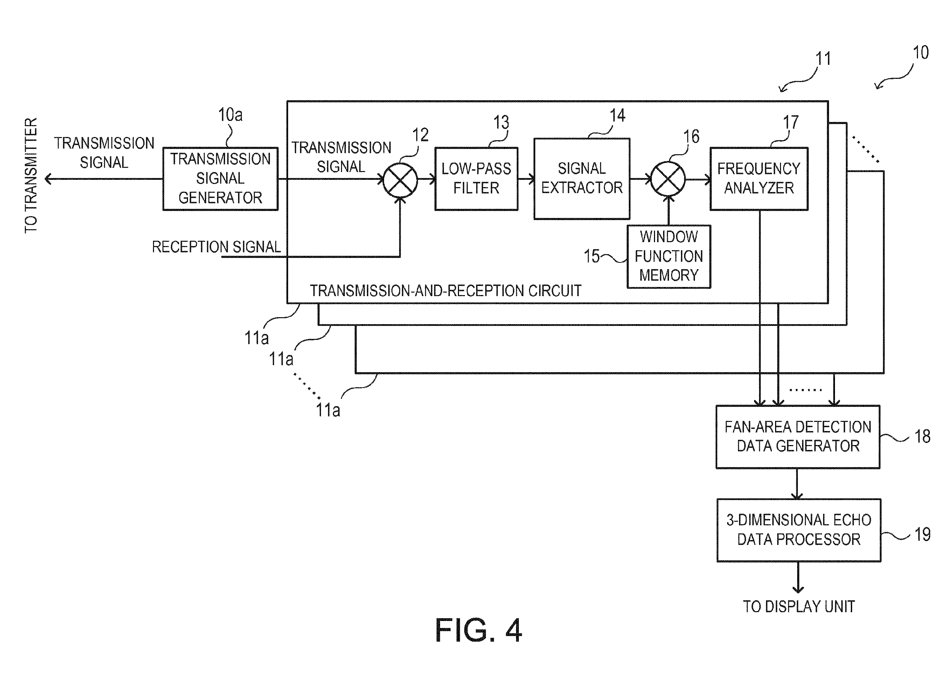

Fig. 4 is a block diagram illustrating a configuration of the signal processor 10. As illustrated in Fig. 4, the signal processor 10 includes a transmission signal generator 10a, a transmission-and-reception processor 11 (which may be also referred to as a reception processor or a reception processing means), a fan-area detection data generator 18 (which may be also referred to as a beamforming processor or a beamforming processing means), and a 3-dimensional echo data processor 19.

The transmission signal generator 10a generates the transmission signal (which is typically an electric signal), basis of the transmission wave transmitted by the projector 2. The transmission signal generated by the transmission signal generator 10a is transmitted to the transmitter 6 and the transmission-and-reception processor 11.

The transmission-and-reception processor 11 has a plurality of transmission-and-reception circuits 11a. Each transmission-and-reception circuit 11a receives the transmission signal generated by the transmission signal generator 10a and the received signal generated by the corresponding receive circuit (the received signal obtained by the corresponding ultrasonic transducer 3a). The transmission-and-reception circuit 11a performs signal processing on the received signal.

Each transmission-and-reception circuit 11a includes a first multiplier 12, a low-pass filter 13, a signal extractor 14, a window function memory 15, a second multiplier 16, and a frequency analyzer 17. Note that, each transmission-and-reception circuit 11a performs the same processing except that the received signal input to each transmission-and-reception circuit is different as each received signal is generated based on a different ultrasonic transducer.

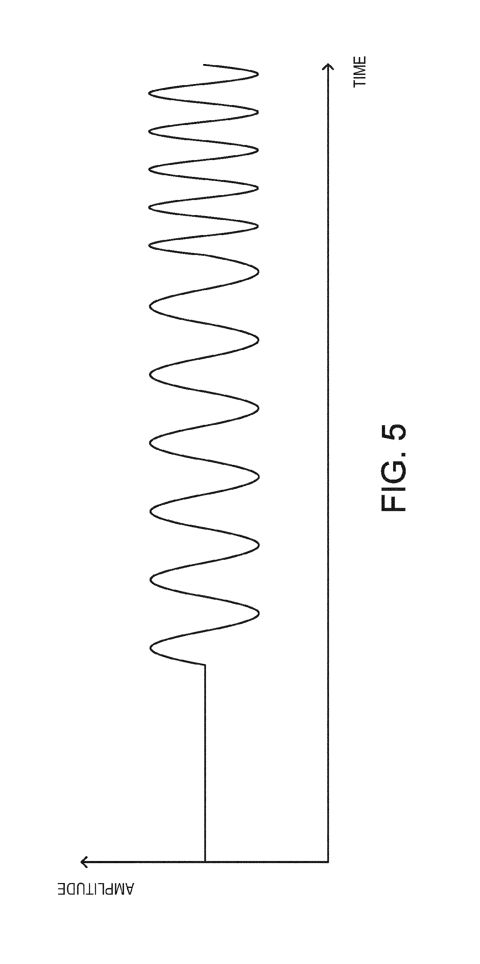

The first multiplier 12 generates a beat signal based on the transmission signal generated by the transmission signal generator 10a and the received signals obtained from the ultrasonic waves received by the ultrasonic transducers 3a. Specifically, the first multiplier 12 combines (e.g. mixes or multiplies) the transmission signal with the received signals described above to generate the beat signal. Fig. 5 is a chart illustrating one example of the beat signal generated by the first multiplier 12.

The low-pass filter 13 removes an unrequired signal component (which is typically a high frequency component) from the beat signal generated by the first multiplier 12.

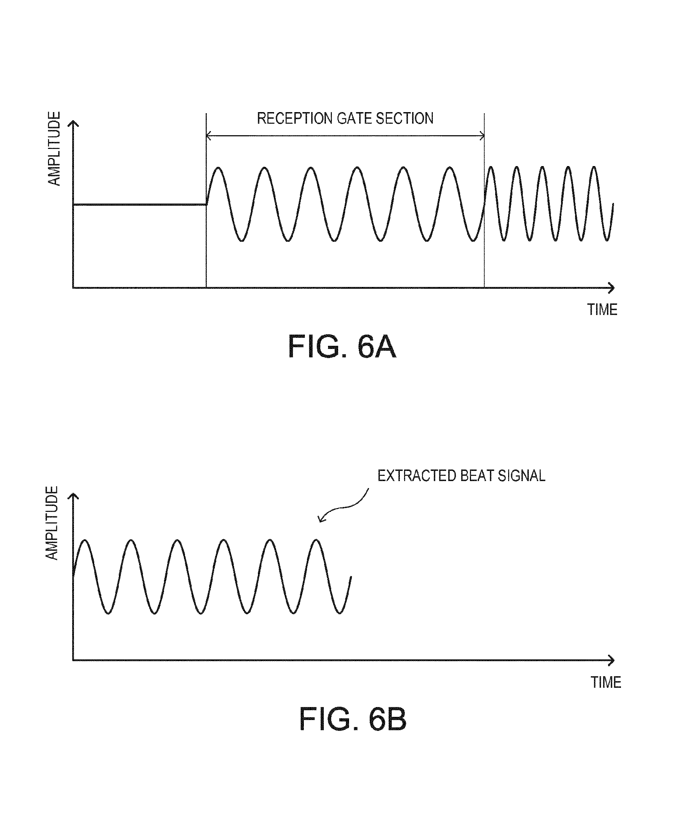

From the beat signal with the unrequired signal component removed by the low-pass filter 13, the signal extractor 14 extracts a signal from within a section so as to process the signal in a post process. Specifically, the signal extractor 14 sets the section to be processed to be a reception gate section, and sets the beat signal within the reception gate section to be the extracted beat signal. Figs. 6A and 6B are views for describing the generation of the extracted beat signal, in which Fig. 6A illustrates a waveform of the beat signal outputted from the low-pass filter (i.e., a waveform before the extracted beat signal is extracted), and Fig. 6B illustrates a waveform of the extracted beat signal extracted from the beat signal in Fig. 6A.

The window function memory 15 stores a particular window function. Further, the second multiplier 16 multiplies the extracted beat signal by the particular window function stored in the window function memory 15.

The frequency analyzer 17 analyzes the output result from the second multiplier 16 (the extracted beat signal multiplied by the window function) and generates data indicating an amplitude and a phase (amplitude spectrum and phase spectrum; hereinafter, they may comprehensively be referred to as the complex spectrum) at each frequency. Examples of the analyzing method include a Discrete Fourier Transform (DFT) and a Fast Fourier Transform (FFT). Note that, by multiplying the extracted beat signal by the window function as described above, side lobes of the complex spectrum generated by the frequency analyzer 17 can be reduced.

Further, in the transmission-and-reception processor 11, the complex spectrum corresponding to each ultrasonic transducer 3a is generated by the corresponding transmission-and-reception circuit 11a. The complex spectrum generated by the frequency analyzer 17 is outputted to the fan area detection data generator 18.

The fan area detection data generator 18 converts a horizontal axis of the complex spectrum generated by each transmission-and-reception circuit 11a from a frequency into a distance (e.g. a distance from the ship) to generate echo data (e.g. complex amplitude data of the echo at each distance from the ship). A coefficient for the conversion from the frequency into the distance may be calculated to perform the conversion based on the sweeping bandwidth of the transmission signal, the sweeping time period of the transmission signal, and the underwater sound speed.

Further, the fan area detection data generator 18 performs a beamforming based on each echo data described above. Specifically, the fan area detection data generator 18 is provided as a beamforming processor configured to perform the beamforming based on each echo data described above. As one example of the beamforming method, a case of phasing addition is described. By adding each echo data after performing a predetermined phase rotation thereon, a reception beam NB oriented at the predetermined angle θ (see Fig. 3) can be formed. By changing the phase rotational amount of each echo data and changing the orientation of the reception beam NB within a particular range, an echo intensity at each angle θ can be obtained. The fan area detection data generator 18 can calculate echo intensities at respective positions of an area specified by a distance r and the angle θ by obtaining the echo intensity at each angle θ and each distance r. Hereinafter, the echo intensity may be referred to as the fan area echo intensity.

Further, the fan area detection data generator 18 calculates the fan area echo intensity at a rotational angular position that is gradually changed by the motor 4 (ϕ= ϕ1, ϕ2, ... in Fig. 3). Here, the rotational speed of the motor 4 may need to be set so that a time period for rotating by the angle corresponding to the thickness of the fan area FA becomes longer than a time period corresponding to the reception gate section at the transmission-and-reception processor 11. In a case of shortening the detection time as much as possible, the rotational speed of the motor 4 may be set so that both of the time periods match with each other.

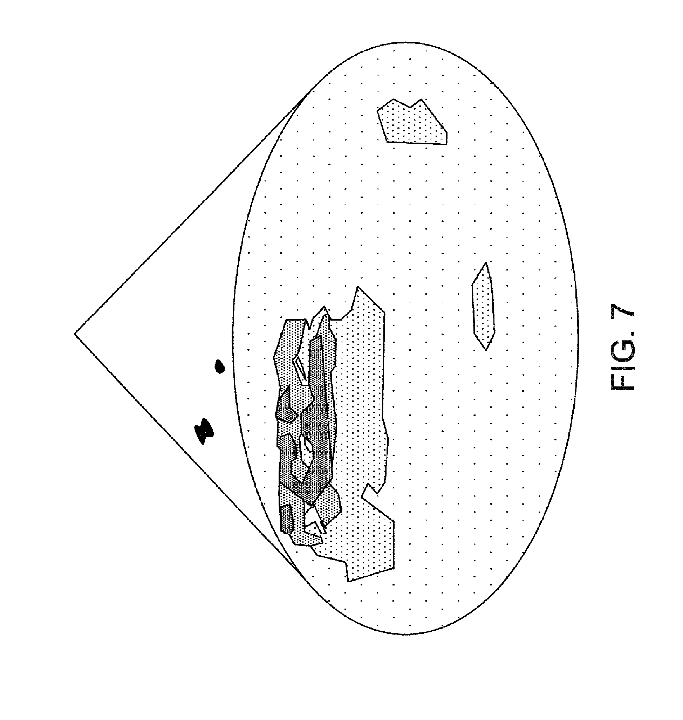

The 3-dimensional echo data processor 19 combines each fan area echo intensity of every rotational angular position ϕ (ϕ1, ϕ2, ...) generated by the fan area detection data generator 18, and generates 3-dimensional echo data. Fig. 7 is a view illustrating one example of an image that is generated from the image signal based on the 3-dimensional echo data and displayed on the display unit 8. In Fig. 7, echoes from shallow positions are indicated by hatching with higher density, and echoes from deep positions are indicated by hatching with lower density. Note that, in the image of Fig. 7, the hatching is applied to areas where the echo intensity is above a predetermined threshold, and hatching density is not related to echo intensity.

### [Simulation Result]

Hereinafter, a detection time required for detecting over a particular range with the underwater detection apparatus 1 of this embodiment is compared, through simulation, with a detection time for detecting over the particular range with a known (general) underwater detection apparatus (e.g. an underwater detection apparatus using mechanical scanning based on a pulse echo method). The simulation is performed under a condition that a rotation step is 6° (a rotational angle in a single step of ϕ in Fig. 3), the number of rotation steps is 30, the detection range is 100m, a range resolution is 0.75m, and a CTFM sweep bandwidth is 15 kHz.

Note that, the range resolution is set to have a similar specification to the general underwater detection apparatus, and the CTFM sweep bandwidth is set to be a bandwidth which is transmittable and receivable by an ultrasonic transducer adopted in the general underwater detection apparatus. As a result of simulating a shortest settable time period as the reception gate section under such a limiting condition described above, it was found that the reception gate section can be set to 9ms. In consideration of this result, the rotational speed of the sensor is set to 9ms/6°.

Further, the underwater detection apparatus using mechanical scanning based on the pulse echo method is set to have a condition that a transmission beam is a fan beam same as the fan area FA, and the detection over the 3-dimensional space is performed by repeating a detection through electronic scan with a narrow reception beam within the fan beam, and a mechanical rotation of the transmission beam and the reception beam by a motor. When the underwater sound speed is 1,500m/s, a round-trip propagation of the detection range of 100m by the ultrasonic pulse requires 133ms. Therefore, the rotational speed of the projector and the sensor is 133ms/6°.

As a result of simulation under such a condition described above, in the case of the underwater detection apparatus using mechanical scanning based on the pulse echo method, the detection time is approximately 4,000ms; whereas in the case of the underwater detection apparatus 1 of this embodiment, the detection time is 270ms. Specifically, it was confirmed that with the underwater detection apparatus 1 of this embodiment, the detection time can significantly be shortened (at least to 1/10 in this simulation result) compared to the conventional method (the pulse echo method).

### [Effects]

As above, with the underwater detection apparatus 1 of this embodiment, by performing the beamforming based on each beat signal generated based on the reflected wave received by each of the plurality of ultrasonic transducers 3a, the echo intensity within the fan area FA can be calculated. Thus, the sensor 3 does not need to be mechanically moved in order to obtain the echo intensity within the fan area FA. Therefore, the echo intensity within the 2-dimensional area can be obtained in a comparatively short time period.

Further, with the underwater detection apparatus 1, the sensor 3 is rotated using the motor 4 by a particular angle at a time to change the position of the fan beam formed by the sensor 3. Thus, the detection over the 3-dimensional space can be performed by the fan beam area echo intensity calculated for every angular position ϕ, and a 3-dimensional position of the target object can be estimated. Moreover, the receiving elements do not need to be arranged 2-dimensionally or 3-dimensionally as they are arranged in a conventional scanning sonar, and a number of receiving elements can be reduced. Therefore, the apparatus can be simplified.

Further, since the underwater detection apparatus 1 detects the target object by using a CTFM method, compared to the case of adopting the pulse echo method, the amount of time to detect an object over a particular range can be shortened. More specifically, since the CTFM method is adopted, the underwater detection apparatus 1 can obtain the echo intensity within the fan area FA in a time period shorter than the time period required for the round-trip propagation of the detection range by the ultrasonic pulse. Thus, the echo intensity within the 2-dimensional area (fan area FA) can be obtained in a comparatively short time period, and as a result, the time period required for detecting the predetermined range can be shortened.

Therefore, according to the underwater detection apparatus 1, a CTFM detection apparatus capable of detecting a 3-dimensional position of the target object in a comparatively short time period can be provided at low cost.

Further, with the underwater detection apparatus 1, since the transmission beam has a 3-dimensional shape, a single transmission of the ultrasonic wave can cover the detection target area for the target object. In this manner, the projector 2 does not need to be set in motion in order to run through the entire detection area. Therefore, the apparatus can be simplified.

Further, the underwater detection apparatus 1 generates the beat signal by combining the transmission signal based on the waveform of the transmission wave, with the received signals based on the waveform of the reflected waves.

Further, with the underwater detection apparatus 1, the ultrasonic transducers 3a are linearly arranged to form the sensor 3 into the linear array. Therefore, compared to when the ultrasonic transducers are arranged 2-dimensionally or 3-dimensionally, the number of the ultrasonic transducers 3a can be reduced.

Further, with the underwater apparatus 1, the sensor 3 is rotated by the motor 4. Therefore, a CTFM detection apparatus capable of detecting 3-dimensional space can be constructed with a comparatively simple configuration.

Further, with the underwater detection apparatus 1, the sensor 3 is rotated about the axis perpendicular to the receiving surface of the ultrasonic transducers 3a. Therefore, the detection can suitably be performed over a 3-dimensional area extending from the perpendicular axis.

Further, with the underwater detection apparatus 1, the sensor 3 is set in motion in the direction both perpendicular to the direction of arrangement of the ultrasonic transducers 3a and within the receiving surface of the ultrasonic transducers 3a. In this manner, the rotational direction of the sensor 3 being perpendicular to the 2-dimensional fan area FA reduces overlapping of the fan area FA that moves over time. Thus, the detection can be performed over a wide area in a comparatively short time period.

Further, with the underwater detection apparatus 1, the projector 2 generates the transmission beam having the conical shape, which in some embodiments may be the right conical shape. Therefore, the detection can be performed over a wide area below the ship.

Moreover, according to the underwater detection apparatus 1, an underwater detection apparatus capable of detecting a 3-dimensional position of the target object underwater in a comparatively short time period can be provided at low cost.

### [Modifications]

Although a number of embodiment of this disclosure is described above, this disclosure is not limited thereto, and may be modified in various forms without deviating from the scope of this disclosure.

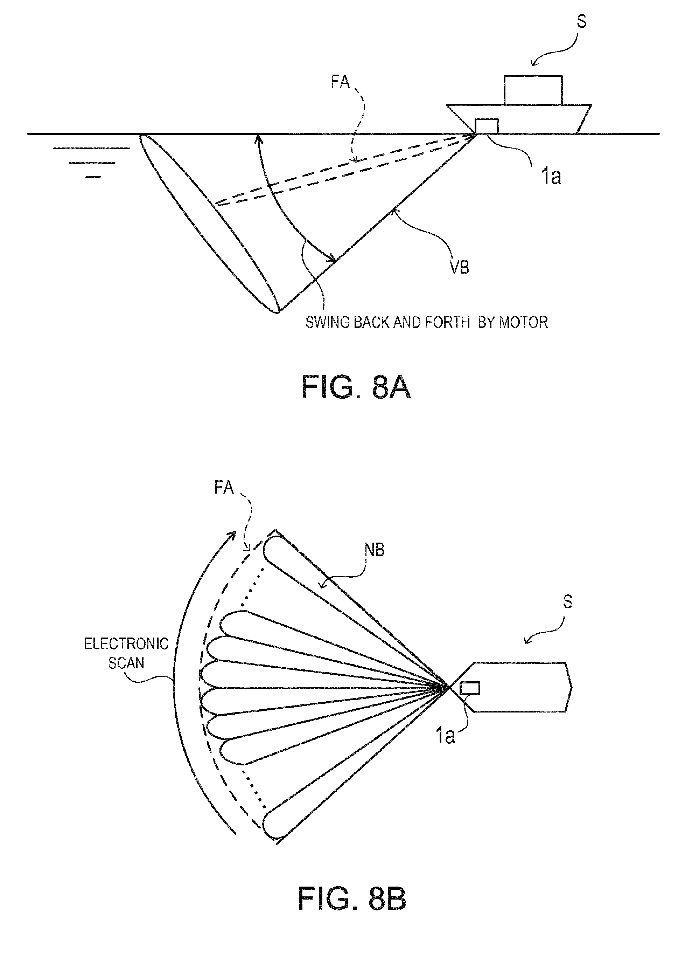

(1) Fig. 8A is a side view of the transmission and reception beams formed by an underwater detection apparatus 1a according to a first modification, illustrated with the ship S on which the underwater detection apparatus 1a is mounted, and Fig. 8B is a top view of the transmission and reception beams formed by the underwater detection apparatus 1a according to the first modification, illustrated with the ship S on which the underwater detection apparatus 1a is mounted. The underwater detection apparatus 1 of the above embodiment detects below the ship; however, without limiting to this, it may detect a forward area of the ship, for example, as the underwater detection apparatus 1a of the first modification. Specifically, the underwater detection apparatus 1a of the first modification is provided as a forward detection sonar capable of detecting reef, etc., that may cause stranding in the forward area of the ship. Hereinafter, differing points from the above embodiment are mainly described, and description of other points is omitted. Note that, compared to the underwater detection apparatus 1 of the above embodiment, the underwater detection apparatus 1a of this modification greatly differs with regard to the area that can be detected, and the configuration thereof is substantially the same as the configuration in Fig. 1.
   The underwater detection apparatus 1a of this modification includes a projector 2 having a similar configuration to the above embodiment. However, in this modification, the projector 2 is fixed to a front side of the ship so that a transmitting surface thereof inclines forward of the ship with respect to the vertical direction. Thus, with the underwater detection apparatus 1a of this modification, a volume beam VB as a transmission beam is generated to extend both forward of the ship and underwater. For example, the volume beam VB is generated into a conical shape so that it covers 0° to 45° when the horizontal direction is 0° and the vertically downward direction is 90°, and also covers a range from 45° on the starboard side to 45° on the port side.
   Further, the underwater detection apparatus 1a of this modification includes a sensor 3 having a similar configuration to the above embodiment. A plurality of ultrasonic transducers 3a are arranged in the left-and-right directions of the ship. However, in this modification, the sensor 3, similar to the case of the projector 2, is fixed to the front side of the ship so that a receiving surface thereof inclines forward of the ship with respect to the vertical direction. Thus, with the underwater detection apparatus 1a of this modification, the fan area FA defined as the range where the plurality of ultrasonic transducers 3a of the sensor 3 have sensitivity is formed to extend both forward of the ship and underwater. For example, the fan area FA of this modification is formed into a 2-dimensional shape in which the thickness in the up-and-down directions is comparatively thin, as thin as about 6°, and covers a range from 45° on the starboard side to 45° on the port side when the forward direction is 0°.
   Further, the sensor 3 of this modification is inclined upward or downward by the motor 4 so as to vertically swing back and forth. Thus, the fan area FA can be vertically swung back and forth. Therefore, the detection can be performed 3-dimensionally over the forward area of the ship.
   As described above, also by swinging the fan area FA of this modification, similar to the underwater detection apparatus 1 of the above embodiment, a CTFM detection apparatus capable of detecting the 3-dimensional position of the target object in a short time period can be provided at low cost.
   Further, with the underwater detection device of this modification, since the sensor 3 is swung back and forth, a CTFM detection apparatus capable of detecting over a detection area extending in a particular direction (forward of the ship) can be constructed with a comparatively simple configuration. Note that, in this modification, the direction of arrangement of the plurality of ultrasonic transducers 3a may be in the front-and-rear directions (bow and stern directions) of the ship, and the moving direction of the fan area FA may be in the left-and-right directions.

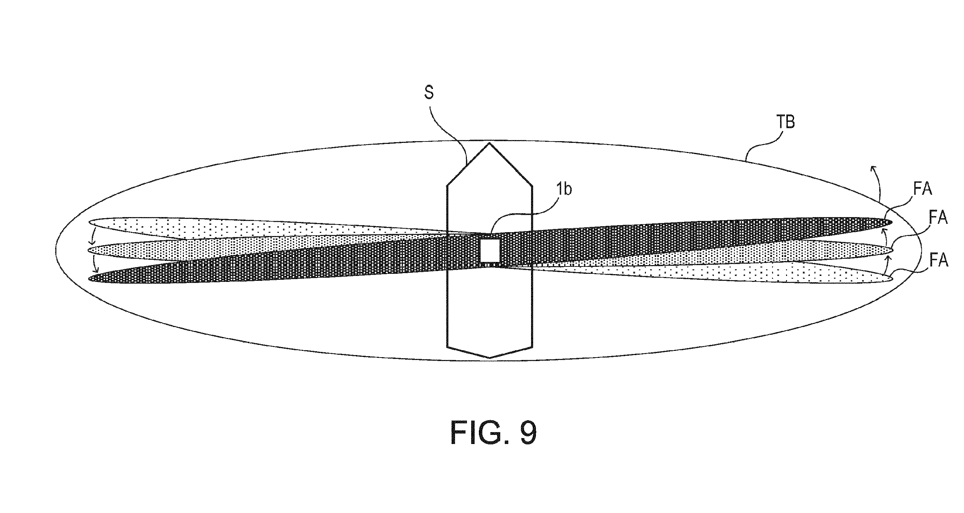

(2) Fig. 9 is a top view of transmission and reception beams formed by an underwater detection apparatus 1b according to a second modification, illustrated with the ship S on which the underwater detection apparatus 1b is mounted. With the underwater detection apparatus 1b of this modification, not only the reception beam, but the transmission beam TB is also rotated.
   As illustrated in Fig. 9, the transmission beam TB generated by the underwater detection apparatus 1b of this modification is generated into a volume beam shape slightly wider (longer in the thickness direction) compared to the fan area FA. Further, the transmission beam TB is rotated by the motor in the direction indicated by the arrow in Fig. 9, at the same rotational speed as the fan area FA. The width (the length in the thickness direction) of the transmission beam TB can be determined based on a ratio of a time period of a reception gate section set by the underwater detection apparatus 1b of this modification with respect to a time period required for the round trip propagation of the detection range by the ultrasonic pulse. For example, if this ratio is 1/3, by setting the transmission beam TB to be wider (longer in the thickness direction) than the range corresponding to three steps of rotation of the fan area FA (see Fig. 9), even when the sensor is rotated without waiting for a return of the reflection wave at a predetermined rotational angle, the reflection wave can be received at the rotated angle. Therefore also in this modification, similar to the above embodiment, a CTFM detection apparatus capable of detecting the 3-dimensional position of the target object in a short time period can be provided at low cost.
   Furthermore, according to this modification, the ultrasonic wave transmitted from the projector generating the transmission beam TB is not transmitted to an unrequired azimuth, and the transmission wave is transmitted only to the azimuth where the reception of the echo by the sensor is required. Thus, the transmission wave can be transmitted with concentrated energy to a desired direction. Therefore, an electric power for transmitting the transmission wave can be reduced. Thus, a CTFM detection apparatus effective in saving energy can be provided.
(3) The transmission-and-reception processor 11 of the above embodiment includes the window function memory 15 and the second multiplier 16; however, without limiting to this, the window function memory and the second multiplier may be omitted from the configuration of the transmission-and-reception processor. Thus, deterioration of a resolution of a main lobe can be suppressed.
(4) In the first multiplier 12 of the transmission-and-reception processor 11 of the above embodiment, the transmission signal generated by the transmission signal generator 10a and the received signals corresponding to the waveform of the ultrasonic waves received by the ultrasonic transducers 3a are combined (e.g. mixed or multiplied) with each other to generate the beat signal; however, without limiting to this, a signal based on the transmission signal and a signal based on the received signal may be combined. For example, a signal that causes a frequency offset on the transmission signal and the received signals may be combined to generate the beat signal. In this manner, echo data in which influence of a direct current offset that may occur due to the A/D conversion by the receiver 7 is reduced can be obtained as the output of the transmission-and-reception processor 11.
(5) In the above embodiment, the combining of the transmission signal with the received signals is performed as the digital signal processing; however, it may be performed as analog signal processing. In this case, the first multiplier 12 is disposed in the transmission-and-reception device 5 instead of the transmission-and-reception processor 11, and the combining described above is performed before the received signals are A/D converted by the receiver 7.
(6) In the above embodiment, the echo intensity at each angle θ within the fan area FA is calculated by using the phasing addition as the beamforming method implemented at the fan area detection data generator 18; however, it is not limited to this. Specifically, the echo intensity at each angle θ within the fan area FA may be calculated by using an adaptive beamforming method, such as the Capon method or the MUSIC method. Thus, compared to the case of using the phasing addition, the angular resolution in the θ direction of the apparatus can be improved.
(7) In the above embodiment, the sensor 3 is formed into the linear array shape; however, without limiting to this, for example, by arranging the plurality of ultrasonic transducers 3a in a row along an arc, the range of the fan area FA can be expanded in the θ direction, and the detection can be performed over an even wider area.
(8) In the above embodiment, the frequency modulated continuous wave is transmitted by the projector 2; however, without limiting to this, a frequency modulated pulse wave having a pulse width corresponding to a time period longer than that of a round-trip propagation of the detection range by the ultrasonic wave may be transmitted by the projector.
(9) In the above embodiment and modifications, the underwater detection apparatus is described as the CTFM detection apparatus as an example; however, without limiting to this, a radar, etc., may be given as the CTFM detection apparatus.

## Claims

1. A Continuous Transmission Frequency Modulated (CTFM) detection apparatus comprising:
a projector (2) configured to transmit a frequency modulated transmission wave;
a sensor (3) comprising a plurality of receiving elements (3a), each receiving element (3a) of the plurality of receiving elements (3a) receiving a reflected wave, the reflected wave comprising a reflection of the transmission wave;
a motion mechanism (4) configured to set the sensor (3) in motion;
a reception processing means (11) configured to generate a plurality of beat signals, each beat signal of the plurality of beat signals corresponding to a receiving element (3a) from the plurality of receiving elements (3a) based at least in part on the transmission wave transmitted by the projector (2) and the reflected wave received by the receiving element (3a), wherein at least some of the beat signals from the plurality of beat signals corresponds to a different receiving element (3a) from the plurality of receiving elements (3a); and
a beamforming processing means (18) configured to perform a beamforming process based on each beat signal generated by the reception processing means (11).

2. The CTFM detection apparatus of claim 1, wherein
a transmission beam generated by said projector (2) has a 3 dimensional shape.

3. The CTFM detection apparatus of claim 1 or claim 2, wherein
the reception processing means (11) combines a transmission signal with a received signal to generate the beat signal, wherein the transmission signal is based at least in part on the transmission wave and wherein the received signal is based at least in part on the reflected wave.

4. The CTFM detection apparatus of any of the preceding claims, wherein
the plurality of receiving elements (3a) are linearly arranged.

5. The CTFM detection apparatus of any of the preceding claims, wherein
the motion mechanism (4) rotates the sensor (3).

6. The CTFM detection apparatus of claim 5, wherein
the motion mechanism (4) rotates the sensor (3) about an axis perpendicular to a receiving surface of the sensor (3), said receiving surface being a surface where the reflected wave is received.

7. The CTFM detection apparatus of any one of claims 1 to 4, wherein
the motion mechanism (4) swings the sensor (3) back and forth.

8. The CTFM detection apparatus of any of the preceding claims, wherein
the plurality of receiving elements (3a) are arranged in a straight line;
the motion mechanism (4) sets the sensor (3) in motion in a direction that is both perpendicular to said straight line and within a receiving surface of the sensor (3), said receiving surface being a surface where the reflected wave is received.

9. The CTFM detection apparatus of any of the preceding claims, wherein
the beamforming processing means (18) performs adaptive beamforming.

10. The CTFM detection apparatus of any of the preceding claims, wherein
the projector (2) generates a transmission beam with a conical shape.

11. An underwater detection apparatus comprising the CTFM detection apparatus of any of the preceding claims.
